# EUROPÄISCHE PATENTSCHRIFT

(11) **EP 2 674 452 B1**
(45) Veröffentlichungstag und Bekanntmachung des Hinweises auf die Patenterteilung: **07.03.2018**
(21) Anmeldenummer: 12171802.7
(22) Anmeldetag: 13.06.2012
(51) Int. Cl.: C08K 5/3492

(54) **Schwefelvernetzbare Gummierungsmischung**
Sulphur linkable rubber coating mixture
Mélange de gommage pouvant être mis en réseau de souffre

(43) Veröffentlichungstag der Anmeldung: 18.12.2013
(73) Patentinhaber: Continental Reifen Deutschland GmbH, 30165 Hannover (DE)
(72) Erfinder: Kramer, Thomas, 32049 Herford (DE); Recker, Carla, 30167 Hannover (DE); De Risi, Francesca, 30161 Hannover (DE); Plevak, Zdeno, 01707 Povazska Bystrica (SK)

(56) Entgegenhaltungen:
- EP-A1- 0 385 033
- EP-A1- 2 292 449
- DE-A1- 3 342 464
- DE-T2- 68 910 107
- US-A- 4 699 832

## Beschreibung

Die Erfindung betrifft eine schwefelvernetzbare Gummierungsmischung für textile Festigkeitsträger in Fahrzeugluftreifen, die ein Methylenakzeptor-Methylendonor-Paar enthält. Ferner betrifft die Erfindung einen Fahrzeugluftreifen, der zumindest eine solche mit Schwefel vernetzte Gummierungsmischung aufweist.

In schwefelvernetzbaren Gummierungsmischungen für textile Festigkeitsträger wie Rayon, Polyamid und Polyester werden üblicherweise so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Als Methylendonor/Formaldehydspender werden z. B. Hexamethoxymethylmelamin (HMMM) und/oder Hexamethylentetramin (HMT) eingesetzt. Ihr Einsatz ist in der Reifenindustrie weit verbreitet. Als Methylenakzeptorreaktanten kommen Resorcin und Resorcinäquivalente oder deren Vorkondensate zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit dem RFL-Dip in haftende Wechselwirkung tritt.

Resorcin hat einen relativ hohen Dampfdruck bei den Verarbeitungstemperaturen einer Gummierungsmischung, so dass es z. T. bei der Verarbeitung verdampft und sich an kühleren Bauteilen niederschlägt. Dies führt zu großen Verunreinigungen und somit hohem Reinigungsaufwand. Ferner ist Resorcin als gesundheitsschädlich und umweltgefährlich eingestuft. Man ist daher bestrebt, auf Resorcin als Methylenakzeptorreaktant zu verzichten. Durch den Einsatz vorkondensierter Resorcinprodukte lassen sich die Verunreinigungen reduzieren, allerdings sind diese deutlich teurer.

Mischungen, die auf Methylenakzeptorreaktanten verzichten, sind z. B. aus der EP 0 830 423 B1 und der EP 2 065 219 A1 bekannt. In diesen Schriften werden aber so genannte selbstkondensierende alkylierte Triazinharze mit hoher Imino- und/oder Methylolfunktionalität eingesetzt, wobei angenommen wird, dass die hohe Imino- und/oder Methylolfunktionalität es diesen Harzen erlaubt, selbst zu kondensieren und dabei ein für die Haftung nötiges Netzwerk zu bilden, ohne dass es eines Methylenakzeptorreaktanten bedarf. Der Verzicht auf ein Methylenakzeptor-Methylendonor-Paar wird in diesen Schriften nicht erwähnt.

Die EP 2 292 449 A1 offenbart eine Gummierungsmischung, die als Methylenakzeptorharz ein reaktives Phenol-Formaldehyd-Harz enthält.

Aus der DE 689 10 107 T2 und der DE 690 30 530 T2 sind ferner superharte Kautschukmischungen bekannt, die als Kernreiter (Reifenwulstfüllkautschuk) eingesetzt werden und zur zusätzlichen Netzwerkbildung (Erhöhung der Steifigkeit der Vulkanisate) mit ungesättigten Ölen oder aromatischen Kohlenwasserstoffen modifizierte Phenolharze und HMT enthalten. Zu den ungesättigten Ölen, mit denen die Phenolharze modifiziert sind, zählen Cashewnussöl, Tallöl und Leinöl. Gummierungsmischungen, die mit Festigkeitsträgern in direkten Kontakt kommen, werden in diesen Schriften nicht genannt.

Ferner offenbaren die US 4,699,832 und die DE 33 42 464 A1 Kautschukmischungen mit einem modifizierten Phenolharz und HMT bzw. HMMM.

Der Erfindung liegt die Aufgabe zu Grunde, eine Gummierungsmischung bereitzustellen, die bei guter Haftung zu Festigkeitsträgern zu weniger Verunreinigungen bei der Mischungsherstellung führt.

Gelöst wird die Aufgabe erfindungsgemäß durch eine Gummirungsmischung mit den Merkmalen des Anspruchs 1.

Unter für eine Reaktion mit Methylendonoren reaktive Phenolharze sind solche zu verstehen, die in der ortho- und para-Stellung reaktiv sind für eine derartige Reaktion. Dies können z. B. so genannte Novolake sein.

Es wurde überraschenderweise festgestellt, dass auch beim Einsatz der speziellen reaktiven Phenolharze eine ausreichende Haftung zu den Festigkeitsträgern sowohl vor als auch nach Alterung erzielt werden kann. Auf Resorcin als Methylenakzeptor kann dabei verzichtet werden, so dass es nicht zu Verunreinigungen an Maschinenteilen bei der Mischungsherstellung kommt. Es ist anzunehmen, dass die noch vorhandenen freien Reaktionsgruppen am reaktiven Phenolharz als Methylenakzeptor in der Mischung mit dem Methylendonor reagieren.

Zusätzlich bieten die erfindungsgemäßen Gummierungsmischungen den Vorteil, dass durch die Möglichkeit des Verzichts auf Resorcin insbesondere während der Verarbeitung weniger gesundheitsschädlich und umweltgefährdend sind als die üblichen Gummierungsmischungen mit Resorcin.

Als besonders geeignet für eine gute Reaktion zwischen reaktivem Phenolharz und Methylenakzeptor haben sich modifizierte Phenolharze erwiesen, welche mit einem pflanzlichen und/oder tierischen Öl, einem ungesättigten Öl und/oder aromatischen Kohlenwasserstoffen modifiziert sind.

Gemäß der Erfindung wird als Methylenakzeptor ein mit einem pflanzlichen und/oder tierischen Öl modifiziertes Phenolharz eingesetzt. Diese Phenolharze lassen sich einfach herstellen, sind am Markt erhältlich und tragen den ökologischem Anforderungen, die auch mehr und mehr an Zuschlagstoffe für die Gummiindustrie gestellt werden, Rechnung.

Als pflanzliche und/oder tierische Öle werden Cashewnussöl und/oder Tallöl eingesetzt. Für besonders gute Haftwerte zu den Festigkeitsträgern haben sich diese mit Tallöl und/oder Cashewnussöl modifizierten Phenolharze als vorteilhaft erwiesen.

Gemäß der Erfindung beträgt das Gewichtsverhältnis von mit Tallöl und/oder Cashewnussöl modifiziertem Phenolharz zu Methylendonor 2,2:1 bis 1:2,2, bevorzugt 1,4:1 bis 1:1,4. Mit diesen Gewichtsverhältnissen wird ein Haftungsniveau erreicht, welches dem von herkömmlichen Systemen aus Resorcin und Methylendonor gleicht. Ferner zeigen derartige Mischungen ein gutes Vulkanisationsverhalten bei gleichzeitig guten Vulkanisateigenschaften.

Als Methylendonor wird in der Gummierungsmischung vorzugsweise Hexamethoxymethylmelamin (HMMM) und/oder Hexamethylentetramin (HMT, 1,3,5,7-Tetraazaadamantan, Urotropin) eingesetzt. Dies sind übliche auf dem Markt erhältliche Methylendonoren, die im Zusammenspiel mit den modifizierten Phenolharzen eine besonders gute Haftung zwischen Festigkeitsträger und Gummierungsmischung gewährleisten.

Die schwefelvernetzbare Gummierungsmischung enthält weitere in der Kautschukindustrie übliche Bestandteile, insbesondere zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (ca 10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Styrol-Butadien-Copolymere einsetzbar. Bei den Styrol-Butadien-Copolymeren kann es sich um lösungspolymerisierte Styrol-Butadien-Copolymere (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen handeln.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Gummierungsmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Gummierungsmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Kieselsäuren werden bevorzugt in Mengen von weniger als 15 phr eingesetzt.

Enthält die Gummierungsmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden.

Des Weiteren kann die erfindungsgemäße Gummierungsmischung übliche Zusatzstoffe in üblichen Gewichtsteilen enthalten. Zu diesen Zusatzstoffen zählen Weichmacher, wie z. B. Glyceride, Faktisse, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Gummierungsmischung zugesetzt. Die Vulkanisation kann auch in Anwesenheit von sehr geringen Schwefelmengen in Kombination mit schwefelspendenden Substanzen erfolgen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen:
Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.
Auch weitere netzwerkbildende Systeme, wie z. B. Vulkuren®, Duralink®, Perkalink® oder Systeme, wie sie in der WO 2010/049261 A2 beschrieben sind, können in der Gummierungsmischung eingesetzt werden.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann für die Gummierung unterschiedlicher Festigkeitsträger im Reifen eingesetzt werden. Sie kann z. B. als Gummierung für textile Festigkeitsträger oder metallische Festigkeitsträger eingesetzt werden. Die textilen Festigkeitsträger können z. B. aus Aramid, Polyester, Polyamid, Rayon oder Hybridcorden aus diesen Materialien bestehen.

Wird die Gummierungsmischung für die Gummierung von textilen Festigkeitsträgern eingesetzt, hat es sich für eine gute Haftung zu diesen Festigkeitsträgern als vorteilhaft erwiesen, wenn die Gummierungsmischung 0,5 bis 1,5 phr des mit Tallöl und/oder Cashewnussöl modifizierten Phenolharzes enthält.

Wird die Gummierungsmischung hingegen für die Gummierung von metallischen Festigkeitsträgern eingesetzt, enthält die Gummierungsmischung vorzugsweise 1 bis 6 phr, besonders bevorzugt 1 bis 3 phr, des mit Tallöl und/oder Cashewnussöl modifizierten Phenolharzes.

Die Gummierungsmischung kann zur Gummierung unterschiedlichster Reifenbauteile, wie dem Wulstkern, den Wulstabdeckungen, dem Gürtel, der Karkasse oder den Gürtelbandagen, eingesetzt werden, wobei auch mehrere Bauteile innerhalb eines Reifens mit der erfindungsgemäßen Mischung versehen, d. h. in der Regel kalandriert, werden können. Die Herstellung der erfindungsgemäßen Fahrzeugluftreifen erfolgt dabei nach dem Fachmann bekannten Verfahren.

Vorzugsweise wird die Gummierungsmischung als Karkass- und/oder Bandagengummierung eingesetzt, wo die guten Haftwerte zwischen Festigkeitsträger und Gummierungsmischung zu einer hohen Lebensdauer des Fahrzeugluftreifens führen.

Alternativ oder zusätzlich kann die Gummierungsmischung auch als Gürtelgummierungsmischung eingesetzt werden, was wiederum die Lebensdauer des Fahrzeugluftreifens positiv beeinflusst.

Die Erfindung soll nun anhand der nachstehenden Tabellen näher erläutert werden.

In den Tabellen 1 und 2 sind Beispielmischungen für unterschiedliche Bauteile eines Fahrzeugluftreifens angegeben. In Tabelle 1 sind Mischungen für eine Gummierung textiler Festigkeitsträger dargestellt. Tabelle 2 zeigt Mischungen für eine Gummierung von Stahlcord. Die erfindungsgemäßen Mischungen sind mit E, die Vergleichsmischungen mit V gekennzeichnet.

Bei den Mischungen der Tabellen wurde die Art und Menge an Methylenakzeptor (Resorcin bzw. modifiziertes Phenolharz) und die Menge an Methylendonor (HMMM) variiert.

Die Mischungsherstellung erfolgte unter üblichen Bedingungen unter Herstellung einer Grundmischung und anschließend der Fertigmischung in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Ferner wurde der relative Vernetzungsgrad von 90 % (t₉₀) mit dem gleichen Gerät gemäß DIN 53 529 bestimmt.
Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 300 % Dehnung bei Raumtemperatur gemäß DIN 53 504

Ferner wurden mit den Mischungen aus Tabelle 1 Haftversuche, so genannte Peel-Tests, gemäß ISO 36:2011 (E) mit Auswertung gemäß DIN ISO 6133 an verschiedenen Festigkeitsträgern aus Polyester mit und ohne Alterung vorgenommen. Dazu wurden Festigkeitsträgercorde aus Polyester (1440x2 dtex, 105 epdm) mit den unvulkanisierten Gummierungsmischung kalandriert und anschließend vulkanisiert. Anschließend wurde die Kraft zum Abschälen der Mischung von den Corden vor und nach Alterung über 14 Tage bei 70 °C in Luft und über 4 Tage bei 70 °C in Sauerstoff (> 95 % Sauerstoff) ermittelt und die Bedeckung der Corde mit Mischung nach dem Abziehen optisch ermittelt. 5 bedeutet vollständige Bedeckung, 0 bedeutet, dass keine Gummireste mehr auf dem Cord verblieben sind.

Mit den Mischungen der Tabelle 2 wurden Versuche zur Haftung an vermessingtem Stahlcord gemäß ASTM 2229/D1871 vor und nach Alterung über 5 Tage unter Luft und Wasserdampf bei 105 °C, über 14 Tage bei 95 % relativer Luftfeuchtigkeit und 70 °C sowie über 2 Tage bei 70 °C in Sauerstoff vorgenommen (Einbettlänge in die Gummierungsmischung: 12,5 mm, Auszugsgeschwindigkeit: 125 mm/min). Es wurde die Herausziehkraft und die Bedeckung mit Gummi (0 % = keine Bedeckung, 100 % = vollständige Bedeckung) bestimmt.

**Tabelle 1**

| **Bestandteile** | **Einheit** | **1(V)** | **2(E)** | **3(E)** |
|---|---|---|---|---|
| Polyisopren | phr | 50 | 50 | 50 |
| Polybutadien | phr | 20 | 20 | 20 |
| ESBR^{a)} | phr | 41,25 | 41,25 | 41,25 |
| Ruß N660 | phr | 65 | 65 | 65 |
| Weichmacheröl/Klebharz | phr | 20,5 | 20,5 | 20,5 |
| Alterungsschutzmittel | phr | 2 | 2 | 2 |
| Resorcinharz | phr | 1,63 | - | - |
| tallölmodifiziertes Phenolharz | phr | - | 0,7 | 0,7 |
| Hexamethoxymethylmelamin^{b)} | phr | 2 | 1,08 | 2,15 |
| Stearinsäure | phr | 1 | 1 | 1 |
| Zinkoxid | phr | 3 | 3 | 3 |
| Beschleuniger | phr | 1 | 1 | 1 |
| Schwefel mit 33 % Öl | phr | 3,8 | 3,8 | 3,8 |

| **Eigenschaften** | | | | |
|---|---|---|---|---|
| ML (1+4) bei 100 °C | M.-Einh. | 46 | 46 | 44 |
| t₉₀ | min | 10,8 | 8,4 | 9,4 |
| Härte bei RT | ShoreA | 51,2 | 51,9 | 51,0 |
| Rückprallelast. bei RT | % | 47,0 | 48,4 | 49,0 |
| Zugfestigkeit bei RT | MPa | 13,6 | 12,4 | 13,6 |
| Reißdehnung bei RT | % | 528 | 507 | 555 |
| Modul 300 % | MPa | 7,3 | 7,0 | 6,8 |
| Haftung (ungealtert) | N/25 mm | 388 | 288 | 278 |
| Bedeckung (ungealtert) | - | 4 | 4 | 4 |
| Haftung nach Alterung in Luft | N/25 mm | 201 | 190 | 196 |
| Bedeck. nach Alterung in Luft | - | 4 | 4 | 4 |
| Haftung nach Alterung in O₂ | N/25 mm | 189 | 201 | 198 |
| Bedeck. nach Alterung in O₂ | - | 4 | 4 | 4 |

| | | | | |
|---|---|---|---|---|
| ^{a)} ölverstreckt mit 27,3 % aromatenfreiem Öl ^{b)} 65 %ig auf anorganischem Träger | | | | |

Aus der Tabelle 1 wird ersichtlich, dass auch mit mit Tallöl modifiziertem Phenolharz als Methylenakzeptor eine gute Haftung auch insbesondere nach Alterung erzielt werden kann und die Bedeckung der Festigkeitsträger mit Mischung sehr gut ist. Auch die anderen physikalischen Eigenschaften verbleiben auf gutem Niveau. Der Verzicht auf Resorcin bewirkt dabei, dass es zu weniger Verunreinigungen bei der Mischungsherstellung durch Ablagerungen kommt. Die in den erfindungsgemäßen Mischungen verwendeten Gewichtsverhältnisse von mit Tallöl modifiziertem Phenolharz zu HMMM betrugen dabei 1:1 bzw. 1:2, da HMMM 65-%ig auf Träger vorliegt.

**Tabelle 2**

| **Bestandteile** | **Einheit** | **4(V)** | **5(E)** | **6(E)** | **7(E)** |
|---|---|---|---|---|---|
| Polyisopren | phr | 100 | 100 | 100 | 100 |
| Ruß N326 | phr | 62 | 62 | 62 | 62 |
| Weichmacheröl/Klebharz | phr | 3 | 3 | 3 | 3 |
| Alterungsschutzmittel | phr | 3 | 3 | 3 | 3 |
| Resorcin | phr | 1,85 | - | - | - |
| tallölmodifiziertes Phenolharz | phr | - | 2 | 2 | 6 |
| Hexamethoxymethylmelamin^{b)} | phr | 5,85 | 3,08 | 6,15 | 4,62 |
| Cobaltstearat | phr | 1,3 | 1,3 | 1,3 | 1,3 |
| Zinkoxid | phr | 7 | 7 | 7 | 7 |
| Beschleuniger | phr | 0,75 | 0,75 | 0,75 | 0,75 |
| Schwefel mit 33 % Öl | phr | 6,75 | 6,75 | 6,75 | 6,75 |

| **Eigenschaften** | | | | | |
|---|---|---|---|---|---|
| ML (1+4) bei 100 °C | M.-Einh. | 76 | 78 | 75 | 79 |
| t₉₀ | min | 11,4 | 12,4 | 15,8 | 17,3 |
| Härte bei RT | ShoreA | 77,7 | 77,6 | 76,3 | 79,0 |
| Rückprallelast. bei RT | % | 40,7 | 38,0 | 40,0 | 39,9 |
| Zugfestigkeit bei RT | MPa | 19,2 | 17,4 | 17,9 | 19,3 |
| Reißdehnung bei RT | % | 352 | 345 | 367 | 413 |
| Modul 300 % | MPa | 17,5 | 16,4 | 15,7 | 14,7 |
| Haftung (ungealtert) | N | 423 | 440 | 425 | 420 |
| Bedeckung (ungealtert) | % | 95 | 99 | 99 | 94 |
| Haft. nach Alterung in Dampf | N | 297 | 286 | 372 | 323 |
| Bedeck. n. Alterung in Dampf | % | 90 | 85 | 95 | 83 |
| Haft. n. Alterung in Feuchtigk. | N | 262 | 247 | 294 | 278 |
| Bedeck. n. Alter. in Feuchtigk | % | 85 | 86 | 88 | 84 |
| Haftung nach Alterung in O₂ | N | 258 | 327 | 331 | 354 |
| Bedeck. nach Alterung in O₂ | % | 85 | 89 | 92 | 88 |

| | | | | | |
|---|---|---|---|---|---|
| ^{a)} ölverstreckt mit 27,3 % aromatenfreiem Öl ^{b)} 65 %ig auf anorganischem Träger | | | | | |

Bei den Stahlcordgummierungen der Tabelle 2 ist ebenfalls eine gute Haftung und Bedeckung bei den Mischungen mit mit Tallöl modifiziertem Phenolharz zu beobachten. Auch die anderen Mischungseigenschaften verbleiben auf gutem Niveau, wobei zu beachten ist, dass größere Mengen an dem System aus modifizierten Phenolharz und HMMM zu einer Erhöhung der Vulkanisationszeit t₉₀ führen.

## Patentansprüche

1. Schwefelvernetzbare Gummierungsmischung für Festigkeitsträger in Fahrzeugluftreifen, die ein Methylenakzeptor-Methylendonor-Paar enthält, wobei als Methylenakzeptor ein für eine Reaktion mit einem Methylendonor reaktives Phenolharz eingesetzt wird, wobei als reaktives Phenolharz ein mit Tallöl und/oder Cashewnussöl modifiziertes Phenolharz eingesetzt wird und wobei das Gewichtsverhältnis von mit Tallöl und/oder Cashewnussöl modifiziertem Phenolharz zu Methylendonor 2,2:1 bis 1:2,2 beträgt.

2. Schwefelvernetzbare Gummierungsmischung nach Anspruch 1, **dadurch gekennzeichnet, dass** das Gewichtsverhältnis von mit Tallöl und/oder Cashewnussöl modifiziertem Phenolharz zu Methylendonor 1,4:1 bis 1:1,4 beträgt.

3. Schwefelvernetzbare Gummierungsmischung nach zumindest einem der Ansprüche 1 oder 2, **dadurch gekennzeichnet, dass** als Methylendonor Hexamethoxymethylmelamin (HMMM) und/oder Hexamethylentetramin (HMT) eingesetzt wird.

4. Schwefelvernetzbare Gummierungsmischung nach zumindest einem der Ansprüche 1 bis 3, **dadurch gekennzeichnet, dass** die Festigkeitsträger textile Festigkeitsträger sind und die Gummierungsmischung 0,5 bis 1,5 phr des mit Tallöl und/oder Cashewnussöl modifizierten Phenolharzes enthält.

5. Schwefelvernetzbare Gummierungsmischung nach zumindest einem der Ansprüche 1 bis 3, **dadurch gekennzeichnet, dass** die Festigkeitsträger metallische Festigkeitsträger sind und die Gummierungsmischung 1 bis 6 phr, vorzugsweise 1 bis 3 phr, des mit Tallöl und/oder Cashewnussöl modifizierten Phenolharzes enthält.

6. Fahrzeugluftreifen, der eine mit Schwefel vernetzte Gummierungsmischung nach zumindest einem der Ansprüche 1 bis 5 aufweist.

7. Fahrzeugluftreifen nach Anspruch 6, **dadurch gekennzeichnet, dass** er eine Karkassgummierung und/oder eine Bandagengummierung aus der Gummierungsmischung aufweist.

8. Fahrzeugluftreifen nach Anspruch 6 oder 7, **dadurch gekennzeichnet, dass** er eine Gürtelgummierung aus der Gummierungsmischung aufweist.

## Claims

1. Sulfur-crosslinkable rubberization mixture intended for reinforcement systems in pneumatic tyres and comprising a methylene-acceptor-methylene-donor pair, where a phenolic resin that is reactive in respect of a reaction with a methylene donor is used as methylene acceptor, where a phenolic resin modified by tall oil and/or by cashew nut oil is used as reactive phenolic resin, and where the ratio by weight of phenolic resin modified by tall oil and/or by cashew nut oil to methylene donor is from 2.2:1 to 1:2.2.

2. Sulfur-crosslinkable rubberization mixture according to Claim 1, **characterized in that** the ratio by weight of phenolic resin modified by tall oil and/or by cashew nut oil to methylene donor is from 1.4:1 to 1:1.4.

3. Sulfur-crosslinkable rubberization mixture according to Claim 1 and/or 2, **characterized in that** hexamethoxymethylmelamine (HMMM) and/or hexamethylenetetramine (HMT) is used as methylene donor.

4. Sulfur-crosslinkable rubberization mixture according to at least one of Claims 1 to 3, **characterized in that** the reinforcement systems are textile reinforcement systems and the rubberization mixture comprises from 0.5 to 1.5 phr of the phenolic resin modified by tall oil and/or by cashew nut oil.

5. Sulfur-crosslinkable rubberization mixture according to at least one of Claims 1 to 3, **characterized in that** the reinforcement systems are metallic reinforcement systems and the rubberization mixture comprises from 1 to 6 phr, preferably from 1 to 3 phr, of the phenolic resin modified by tall oil and/or by cashew nut oil.

6. Pneumatic tyre which comprises a sulfur-crosslinked rubberization mixture according to at least one of Claims 1 to 5.

7. Pneumatic tyre according to Claim 6, **characterized in that** it comprises carcass rubberization and/or bandage rubberization made of the rubberization mixture.

8. Pneumatic tyre according to Claim 6 or 7, **characterized in that** it comprises belt rubberization made of the rubberization mixture.

## Revendications

1. Mélange d'engommage réticulable par le soufre pour des renforts dans des pneus de véhicule, qui contient une paire accepteur de méthylène-donneur de méthylène, une résine phénolique réactive avec un donneur de méthylène étant utilisée comme accepteur de méthylène, une résine phénolique modifiée par du tall oil et/ou de l'huile de noix de cajou étant utilisée comme résine phénolique réactive et le rapport pondéral entre la résine phénolique modifiée par du tall oil et/ou de l'huile de noix de cajou au donneur de méthylène valant 2,2:1 à 1:2,2.

2. Mélange d'engommage réticulable par le soufre selon la revendication 1, **caractérisé en ce que** le rapport pondéral entre la résine phénolique modifiée par de l'huile de tall oil et/ou de l'huile de noix de cajou et le donneur de méthylène vaut 1,4:1 à 1:1,4.

3. Mélange d'engommage réticulable par le soufre selon au moins l'une quelconque des revendications 1 ou 2, **caractérisé en ce qu'**on utilise, comme donneur de méthylène, de l'hexaméthoxyméthylmélamine (HMMM) et/ou de l'hexaméthylènetétraamine (HMT).

4. Mélange d'engommage réticulable par le soufre selon au moins l'une quelconque des revendications 1 à 3, **caractérisé en ce que** les renforts sont des renforts textiles et le mélange d'engommage contient 0,5 à 1,5 pce de la résine phénolique modifiée par de l'huile de tall oil et/ou de l'huile de noix de cajou.

5. Mélange d'engommage réticulable par le soufre selon au moins l'une quelconque des revendications 1 à 3, **caractérisé en ce que** les renforts sont des renforts métalliques et le mélange d'engommage contient 1 à 6 pce, de préférence 1 à 3 pce, de la résine phénolique modifiée par de l'huile de tall oil et/ou de l'huile de noix de cajou.

6. Pneu pour véhicule qui présente un mélange d'engommage réticulé par le soufre selon au moins l'une quelconque des revendications 1 à 5.

7. Pneu pour véhicule selon la revendication 6, **caractérisé en ce qu'**il présente un engommage de carcasse et/ou un engommage de bandage constitué par le mélange d'engommage.

8. Pneu pour véhicule selon la revendication 6 ou 7, **caractérisé en ce qu'**il présente un engommage de ceinture constitué par le mélange d'engommage.
